**Europäisches Patentamt**

**European Patent Office**

**Office européen des brevets**

(11) Veröffentlichungsnummer: **0 326 894**
**A2**

(12) # EUROPÄISCHE PATENTANMELDUNG

(21) Anmeldenummer: **89101094.4**

(22) Anmeldetag: **23.01.89**

(51) Int. Cl.4: **H02K 5/16 , D06F 39/08 , A47L 15/42**

(30) Priorität: **02.02.88 DE 8801239 U**

(43) Veröffentlichungstag der Anmeldung:
**09.08.89 Patentblatt 89/32**

(84) Benannte Vertragsstaaten:
**DE FR IT SE**

(71) Anmelder: **Hanning Elektro-Werke GmbH & Co.**
**Holter Strasse 90**
**D-4811 Oerlinghausen(DE)**

(72) Erfinder: **Haverkamp, Hans**
**Kiefernweg 7**
**D-4811 Oerlinghausen(DE)**

(74) Vertreter: **Hentzschel, Hans-Jürgen**
**In der Feldmark 3**
**D-4970 Bad Oeynhausen 1(DE)**

(54) **Entleerungspumpe für Wasch- oder Geschirrspülmaschinen.**

(57) Eine Entleerungspumpe für Wasch- oder Geschirrspülmaschinen, deren elektrischer Antrieb durch einen am Pumpengehäuse (1) befestigten Einphasenmotor erfolgt, weist einen aus einem Blechpaket (12) bestehenden zweischenkeligen Stator auf, zwischen dessen beiden Schenkeln ein Rotor (8) drehbar gelagert ist, und der eine von einem Isoliermaterialmantel (15) umschlossene Erregerwicklung (16) trägt. Um alle Einzelteile dieser Pumpe anschlußfertig in wenigen Arbeitsgängen gemeinsam montieren zu können, und damit zwischen den beiden Lagerhalterungen (17 / 19) der Rotorwelle (7) stets ein gleichbleibender Abstand gewährleistet ist, gehen vom Isoliermaterialmantel (15) der Erregerwicklung (16) werkstoffeinheitlich eine erste Lagerhalterung (17) für die Rotorwelle (7) und auf der entgegengesetzten Statorseite ein Zentrierring (18) zur Aufnahme einer zweiten Lagerhalterung (19) aus, die mittels das Blechpaket (12) des Stators durchsetzender Stege werkstoffeinheitlich miteinander verbunden sind, wobei eine der beiden Lagerhalterungen (17/19) der Rotorwelle (7) an das Pumpengehäuse (1) oder an Teile (4) desselben angeformt ist.

Fig. 2

## Entleerungspumpe für Wasch- oder Geschirrspülmaschinen

Die Erfindung betrifft eine Entleerungspumpe für Wasch-oder Geschirrspülmaschinen, deren elektrischer Antrieb durch einen am Pumpengehäuse befestigten Einphasenmotor erfolgt, der einen aus einem Blechpaket bestehenden zweischenkeligen Stator aufweist, zwischen dessen beiden Schenkeln ein Rotor drehbar gelagert ist, und der eine von einem Isoliermaterialmantel umschlossene Erregerwicklung trägt. Die Einphasenmotoren solcher Entleerungspumpen können als Spaltpolmotor oder Synchronmotor ausgebildet sein. Letzterer unterscheidet sich vom Spaltpolmotor u.a. dadurch, daß die Schenkel seines Stators an ihren freien Enden durch einen Luftspalt voneinander getrennt sind.

Bei bekannten Entleerungspumpen der vorgenannten Art ist es üblich, zwei das Blechpaket zusammehaltende Anker schrauben gleichzeitig zu benutzen, um es damit am Bodenteil des Pumpengehäuses zu befestigen. Diese Anordnung macht es jedoch erforderlich, daß zunächst die Pumpe und der Motorblock jeweils für sich getrennt gefertigt werden müssen und erst anschließend in einem besonderen Montagevorgang zusammengebaut werden können.

Die Aufgabe der Erfindung ist es nun, die ihr zugrunde liegenden Entleerungspumpen so zu gestalten, daß alle Einzelteile der fertigen Pumpe, nämlich das Pumpengehäuse, das Pumpenrad, die Gehäusedichtung, das Blechpaket des Motors mit der darauf angebrachten Erregerwicklung und der Rotor einschließlich der Lagerhalterungen für dessen Welle anschlußfertig in wenigen Arbeitsgängen gemeinsam zu montieren sind. Außerdem soll ein stets gleichbleibender Abstand zwischen den beiden Lagerhalterungen der Rotorwelle gewährleistet sein, damit sich alle bisher notwendigen Maßnahmen zum Ausgleich des infolge von Maßabweichungen in der Stärke des Blechpaketes auftretenden Axialspiels der Rotorwelle einsparen lassen.

Die Lösung der gestellten Aufgabe besteht in der Hauptsache darin, daß vom Isoliermaterialmantel der Erregerwicklung werkstoffeinheitlich eine erste Lagerhalterung für die Rotorwelle und auf der entgegengesetzten Statorseite ein Zentrierring zur Aufnahme einer zweiten Lager halterung ausgeht, die mittels das Blechpaket des Stators durchsetzender Stege und/oder das Blechpaket übergreifender seitlicher Brücken wiederum werkstoffeinheitlich miteinander verbunden sind, wobei eine der beiden Lagerhalterungen der Rotorwelle an das Pumpengehäuse oder an Teile desselben angeformt ist. Hierdurch ist ein Pumpenaufbau erreicht, aufgrund dessen ein das Pumpengehäuse oder z.B. sein Bodenteil, den Isoliermaterialmantel der Erregerwicklung und ein die Lagerhalterungen des Rotors umfassendes sowie das Blechpaket zusammenhaltendes Werkstoffteil in einem einzigen Spritzvorgang hergestellt werden. Damit ist dann der Montagevorgang bereits bis auf die Komplettierung mit den übrigen Einzelteilen, was schließlich mit geringstem Arbeitsaufwand automatisch erfolgen kann, abgeschlossen. Letzteres wird noch unterstützt, wenn die in dem vom Isoliermaterialmantel ausgehenden Zentrierring anzubringende zweite Lagerhalterung form- und kraftschlüssig in diesen einrastet.

Ein weiterer Vorteil der Erfindung ergibt sich bei Entleerungspumpen mit Einphasensynchronmotor, insofern eine den Zentrierring für die zweite Lagerhalterung mit der ersten Lagerhalterung verbindende Brücke im Bereich des die Schenkel des Blechpaketes an ihren freien Enden voneinander trennenden Luftspaltes diesen ausfüllend verläuft, weil auf diese Weise der Rotorraum insgesamt völlig abgekapselt und somit einwandfrei vor Verschmutzung geschützt wird.

Ebenso ist es bei Entleerungspumpen mit Einphasensynchronmotor, bei denen die den Schenkeln des Blechpaketes zugeordnete Erregerwicklung von zwei durch ein Filmscharnier in Verbindung stehenden Spulenkörpern aufgenommen wird, außerdem möglich, die Erregerwicklung ohne großen Aufwand mit Flachsteckerfahnen für ihre Anschlußdrahtenden zu versehen. Dazu wird von der Erfindung vorgeschlagen, daß sich an den im montierten Zustand der Erregerwicklung unmittelbar benachbarten parallelen Kanten der Spulenkörper für die Anschlußdrahtenden der den Spulenkörpern durchgehend aufgebrachten Erregerwicklung bestimmte Flachsteckerfahnen befinden, die in ihrer Gebrauchslage flächenparallele Stellungen zueinander einnehmen und in den Isoliermaterialmantel der Erregerwicklung mit einbezogen sind. Ferner kann diese Flachsteckerfahnen zusätzlich ein in der Formgebung für eine ihnen aufzusetzende Stekkerhülse geeigneter, vom Isoliermaterialmantel der Erregerwicklung gebildeter Führungskragen umgeben.

Ausführungsbeispiele des Anmeldungsgegenstandes werden nachfolgend anhand der Zeichnungen beschrieben. Darin zeigen im einzelnen:

Fig. 1 die perspektivische Darstellung einer nach der Erfindung gestalteten Entleerungspumpe für Wasch-oder Geschirrspülmaschinen,

Fig. 2 den Längsschnitt der Entleerungspumpe aus Fig. 1,

Fig. 3 eine andere mit einem Einphasensynchronmotor ausgestattete erfindungsgemäße Entleerungspumpe in der perspektivischen Ansicht, und

Fig. 4 die Erregerwicklung dieser Pumpe mit ihren Spulenkörpern as Einzeldarstellung.

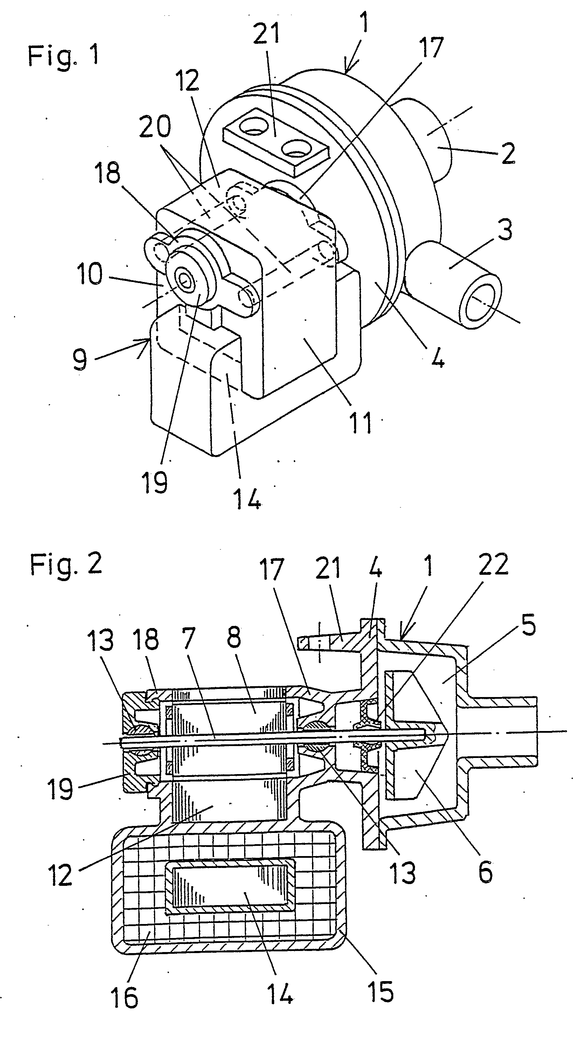

Die in den Fig. 1 und 2 abgebildete Entleerungspumpe weist ein Pumpengehäuse 1 auf, das einen axialen Ansaugstutzen 2 sowie einen radialen Druckstutzen 3 trägt und zusammen mit seinem Bodenteil 4 den Pumpenraum 5 bildet, in dem das Pumpenrad 6 umläuft. Das Pumpenrad 6 ist der Welle 7 des Rotors 8 eines als Spaltpolmotor ausgebildeten Einphasenmotors 9 aufgesetzt, der zwischen den Statorschenkeln 10 und 11 eines Blechpaketes 12 drehbar gelagert ist. Für diese Lagerung sind selbsteinstellbare Kalottenlager 13 vorgesehen.

Auf dem die beiden Statorschenkel 10 und 11 verbindenden Statorjoch 14 ist die von einem Isoliermaterialmantel 15 umschlossene Erregerwicklung 16 angeordnet. Von diesem Isoliermaterialmantel 15 geht auf der dem Pumpengehäuse 1 zugewandten Seite des Blechpaketes 12 werkstoffeinheitlich eine erste Lagerhalterung 17 und auf der entgegen gesetzten Statorseite ein Zentrierring 18 zur Aufnahme einer zweiten Lagerhalterung 19 für die Kalottenlager 13 aus, wobei die erste Lagerhalterung 17 an das Bodenteil 4 des Pumpengehäuses 1 angeformt und mittels das Blechpaket 12 durchsetzender Stege 20 mit dem Zentrierring 18 verbunden ist. Auf diese Weise stellt der Isoliermaterialmantel 15 der Erregerwicklung 16 einschließlich der ersten Lagerhalterung 17 und dem Zentrierring 18 für die zweite Lagerhalterung 19 mit dem einen Befestigungsflansch 21 besitzenden sowie einen Dichtungseinsatz 22 aufnehmenden Bodenteil 4 des Pumpengehäuses 1 ein einziges zusammenhängendes Spritzteil dar.

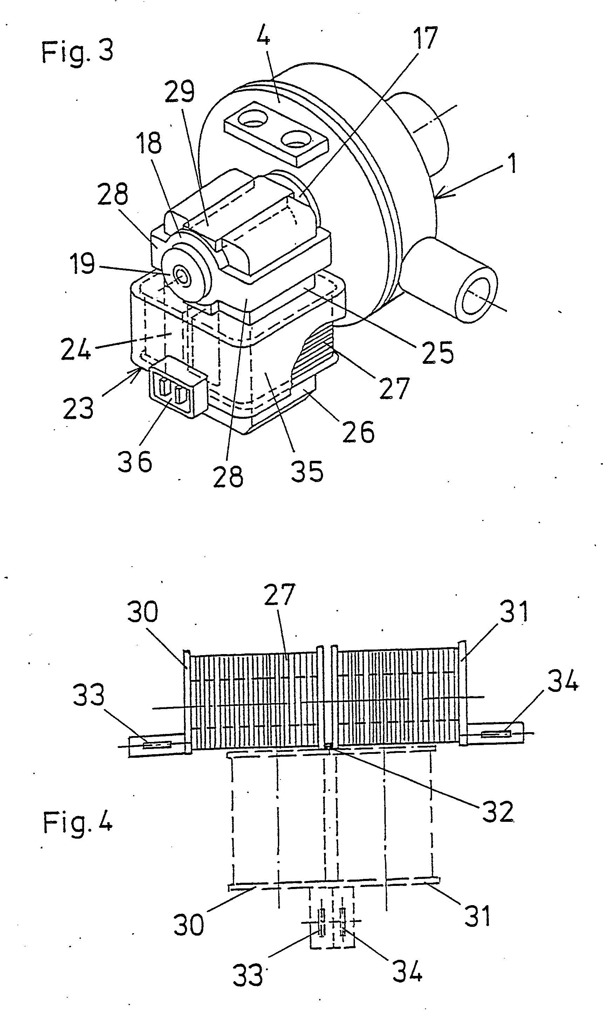

Die in Fig. 3 wiedergegebene Entleerungspumpe unterscheidet sich von der soeben beschriebenen Bauform dadurch, daß ihr Antrieb über einen Einphasensynchronmotor 23 erfolgt. Bei diesem ist jedem Schenkel 24 und 25 des Blechpaketes 26 eine Hälfte der Erregerwicklung 27 zugeordnet und die beiden Schenkel 24/25 sind an ihren freien Enden durch einen Luftspalt voneinander getrennt. Dieser Luftspalt ist im vorliegenden Ausführungsbeispiel von einer außer den das Blechpaket 26 übergreifenden seitlichen Brücken 28 zwischen der ersten Lagerhalterung 17 und dem Zentrierring 18 für die zweite Lagerhalterung 19 verlaufenden weiteren Brücke 29 ausgefüllt, womit der Rotorraum insgesamt abgedichtet und wirksam vor Verschmutzung ge schützt ist.

Eine Besonderheit des im vorliegenden Ausführungsbeispiel zur Anwendung gelangten Einphasensynchronmotors 23 besteht darin, daß dessen Erregerwicklung 27 von zwei einzeln in Fig. 4 wiedergegebenen Spulenkörpern 30 und 31 aufgenommen wird, die an einer ihrer Kanten durch ein Filmscharnier 32 verbunden sind. An beiden Spulenkörpern 30/31 sind Flachsteckerfahnen 33/34 für die Anschlußdrahtenden der den Spulenkörpern 30 und 31 durchgehend aufgebrachten Erregerwicklung 27 vorhanden. Werden die Spulenkörper 30 und 31 nun in den strichpunktiert dargestellten Montagezustand verschwenkt, so gelangen die Flachsteckerfahnen 33 und 34 in ihre Gebrauchslage, in der sie flächenparallele Stellungen zueinander einnehmen, wie es auch aus Fig. 3 hervorgeht. In dieser Gebrauchslage sind sie in den Isoliermaterialmantel 35 der Erregerwicklung 27 mit einbezogen und von einem Führungskragen 36 umgeben, der sich für eine ihnen aufzusetzende, nicht gezeichnete Steckerhülse eignet.

## Ansprüche

1. Entleerungspumpe für Wasch- oder Geschirrspülmaschinen, deren elektrischer Antrieb durch einen am Pumpengehäuse befestigten Einphasenmotor erfolgt, der einen aus einem Blechpaket bestehenden zweischenkligen Stator aufweist, zwischen dessen beiden Schenkeln ein Rotor drehbar gelagert ist, und der eine von einem Isoliermaterialmantel umschlossene Erregerwicklung trägt, dadurch gekennzeichnet, daß vom Isoliermaterialmantel (15/35) der Erregerwicklung (16/27) werkstoffeinheitlich eine erste Lagerhalterung (17) für die Rotorwelle (7) und auf der entgegengesetzten Statorseite ein Zentrierring (18) zur Aufnahme einer zweiten Lagerhalterung (19) ausgeht, die mittels das Blech paket (12/26) des Stators durchsetzender Stege (20) und/oder das Blechpaket (26) übergreifender seitlicher Brücken (28) wiederum werkstoffeinheitlich miteinander verbunden sind, wobei eine der beiden Lagerhalterungen (17/19) der Rotorwelle (7) an das Pumpengehäuse (1) oder an Teile (4) desselben angeformt ist.

2. Entleerungspumpe nach Anspruch 1, dadurch gekennzeichnet, daß die in dem vom Isoliermaterialmantel (15) ausgehenden Zentrierring (18) angebrachte zweite Lagerhalterung (19) form- und kraftschlüssig in diesen einrastet.

3. Entleerungspumpe mit Einphasensynchronmotor nach einem der vorhergehenden Ansprüche, dadurch gekennzeichnet, daß eine den Zentrierring (18) für die zweite Lagerhalterung (19) mit der ersten Lagerhalterung (17) verbindende Brücke (29) im Bereich des die Schenkel (24/25) des Blechpaketes (26) an ihren freien Enden voneinander trennenden Luftspaltes diesen ausfüllend verläuft.

4. Entleerungspumpe mit Einphasensynchronmotor nach Anspruch 3, bei der die den Schenkeln (24/25) des Blechpaketes (26) zugeordnete Erregerwicklung (27) von zwei durch ein Filmscharnier (32) in Verbindung stehenden Spulenkörpern (30/31) aufgenommen wird, dadurch gekennzeichnet, daß sich an den im montierten Zustand der Erregerwicklung (27) unmittelbar benachbarten parallelen Kanten der Spulenkörper (30/31) für die Anschlußdrahtenden der den Spulenkörpern (30/31) durchgehend aufgebrachten Erregerwicklung (27) bestimmte Flachsteckerfahnen (33/34) befinden, die in ihrer Gebrauchslage flächenparallele Stellungen zueinander einnehmen und in den Isoliermaterialmantel (35) der Erregerwicklung (27) mit einbezogen sind.

5. Entleerungspumpe nach Anspruch 4, dadurch gekennzeichnet, daß die beiden Flachstekkerfahnen (33/34) ein in der Formgebund für eine ihnen aufzusetzende Steckerhülse geeigneter, vom Isoliermaterialmantel (35) der Erregerwicklung (27) gebildeter Führungskragen (36) umgibt.

Fig. 1

Fig. 2

Fig. 3

Fig. 4